# EUROPEAN PATENT SPECIFICATION

(11) **EP 0 802 918 B1**
(45) Date of publication and mention of the grant of the patent: **04.03.2015**
(21) Application number: 96900031.4
(22) Date of filing: 03.01.1996
(51) Int. Cl.: C07F 5/00, C09K 11/00

(54) **SURFACTANT COMPOSITIONS**
OBERFLÄCHENAKTIVE ZUSAMMENSETZUNGEN
COMPOSITIONS D'AGENTS TENSIO-ACTIFS

(30) Priority: 13.01.1995 GB 9500638; 22.08.1995 GB 9517176
(43) Date of publication of application: 29.10.1997
(73) Proprietor: CRODA INTERNATIONAL PLC, Goole East Yorkshire DN14 9AA (GB)
(72) Inventor: BOOTH, David, John, Barwick TS17 0XR (GB); WILLIAMS, Martin, Spencer, Cleveland TS15 9SJ (GB)
(74) Representative: Humphries, Martyn
(86) International application number: PCT/GB1996/000005
(87) International publication number: WO 1996/021668

(56) References cited:
- EP-A- 0 313 227
- EP-A- 0 605 727
- US-A- 5 258 451

## Description

This invention relates to surfactant compositions and in particular to a composition including a combination of components which provides a vehicle for materials applied to substrates, particularly yarns, fibres, tapes and/or textiles and which provides both good immediate spreading and good long term spreading, to formulations for treating such substrates based on the composition and to substrates treated using the composition or formulations based on it.

It is well known to apply materials to substrates, particularly textiles, and the yarns, fibres and/or tapes used in making textiles and similar products, to produce beneficial effects either on the properties of the materials or in processing them. A practical requirement in such treatment is that the material should spread over the surface of the substrate. Particularly where the substrate is a pre-formed textile material, the apparent surface is much smaller than the total surface area of the yarn or fibre from which it is made and this is significant where the material applied to the substrate is required to spread over the whole surface of the yarn and/or fibre and/or tape surface to be fully effective. This spreading over the individual yarns and/or fibres is In addition to the first stage spreading needed to coat the apparent surface of the substrate uniformly. Similar requirements can be met in other areas especially of coating e.g. coating film materials, but usually it is not as severe as with textiles as the apparent surface area is much closer to the total surface area.

Among the treatments applied to such substrates are the types of material described as 'spin finishes'. Typically, spin finishes are applied to fibres or yarns mainly to improve their lubricity so as to speed or ease machine handling during the manufacture of articles, particularly textile articles from the yarn or fibre and, thus, commonly spin finish compositions include lubricants.

Published patent application EP0313227 discloses heat-resistant lubricant compositions for processing synthetic fibres. The lubricant composition includes 85% by weight or more of polyether compound, 0.2-5% by weight of modified polysiloxane, and 0.05-10% by weight of phosphonium sulfonate.

The treatment e.g. by the application of spin finish materials, of hydrophobic fibres, yarns and tapes, particularly of polyolefins, such as polypropylene, and polyesters, can be particularly difficult because most conventional treatment materials are relatively hydrophilic and do not work well on the hydrophobic polymer surface. Hydrophobic materials have been used to treat hydrophobic substrates and technically they can perform their primary function well, although they tend to be relatively expensive. Unfortunately, such hydrophobic materials tend not to be readily bio-degradable, in part because they are hydrophobic, and this makes effluent treatment relatively difficult and expensive. Further, their hydrophobicity and consequent incompatibility with water may give rise to down stream processing problems and make effluent treatment more complex. One commercially important use of hydrophobic fibres is as carpet backing especially for tufted carpets. In this use, the carpet backing is now often made of polypropylene and such carpet backing can be made by weaving polypropylene fibre or, more usually, tape e.g. made by splitting stretched film, or using spun-bonded non-woven materials made from polymer fibre. One difficulty with polypropylene carpet backing, whether woven or non-woven, but particularly with spun-bonded non-woven material, is that it can be damaged by the needles used In the tufting process. This problem can be met by lubricating the carpet backing before tufting. The lubricant reduces frictional forces between the polymer and the needle and reduces the damage to the polymer fibre or tape during tufting. Such materials are commonly considered to be a variety of 'spin finish' although they are usually applied to the pre-formed textile rather than to the fibre or tape used to make the textile subsequently.

Suitable lubricants particularly based on silicone polymers, are available, but they are expensive speciality chemicals and are not water soluble or dispersible, which limits their bio-degradability. A further problem with such non-water soluble silicone polymers is that after tufting, some of the silicone may migrate from the carpet backing to the top of the pile e.g. during storage in rolls of carpet. The presence of water insoluble silicone polymers on the fibres of the carpet pile can interfere with dyeing of the carpet giving rise to 'tip frosting' where the tips of the pile are underdyed and appear pale. Analogous problems can be encountered when other auxiliaries are applied to fibres, yarns or textiles.

The present invention is based on our discovery of a water compatible mixed surfactant composition which has good immediate and long term spreading properties, especially on textile materials, and which can act as a vehicle for other components particularly, but not restricted to, lubricants. The components of the composition include an end-capped hydrocarbyl or fatty acid polyoxyalkylene derivative and an organopolysiloxane having polyoxyalkylene side chains.

The present invention accordingly provides a water compatible surfactant composition which comprises:
i at least one end-capped hydrocarbyl polyalkoxylate and/or at least one fatty acid polyalkoxylate; and
ii at least one organopolysiloxane having one or more polyoxyalkylene side chains,
wherein the end-capped hydrocarbyl and or fatty acid polyalkoxylate is or includes those of the formula (Ia) and those of the formula (Ib):

R'O.(AO¹)ₙ.R² (Ia) or R³.CO₂.(AO¹)ₙ.R² (Ib)

where
- R¹: is a C_{4 to 22} hydrocarbyl group, particularly a C_{8 to 20} alkyl or C_{7 to 16} alkylphenyl group;
- R³: is a C_{8 to 20}, particularly a C_{8 to 16}, fatty acid residue;
- AO¹: is an alkylene oxide, particularly ethylene oxide and/or propylene oxide, residue and may vary along the chain;
- n: is from 2 to 25, typically from 3 to 15; and
- R²: is a C_{1 to 10} hydrocarbyl group, particularly a C_{1 to 6} alkyl or C_{7 to 10} aralkyl, especially phenylalkyl, group,
or the end-capped hydrocarbyl polyalkoxylate is an end-capped ethylene oxide/propylene oxide random copolymer of the formula (1c) or a block copolymer of the formula (1d) as defined herein.

In the formula (Ia) the group R¹ is a C_{4 to 22} hydrocarbyl group, particularly a C_{8 to 20} alkyl or C_{7 to 16} alkylphenyl group. Particularly desirably it is a C_{8 to 20} alkyl group i.e. the compound is based on an alkoxylated C_{8 to 20} fatty alcohol. In the formula (Ib) the group R³ is a C_{10 to 20}, particularly a C_{12 to 18}, usually a saturated and especially an alkyl, hydrocarbyl group of a fatty acid. Desirably, the residues AO¹ are ethylene oxide residues so that the alkoxylation is ethoxylation, but propylene oxide residues can be included in the chain. Generally, biodegradability and water solubility are both reduced with increasing propylene oxide residue content (for a given number of alkylene oxide residues). Biodegradability is also adversely affected If the propylene oxide units (when present) are at the end of the chain remote from the hydrocarbyl or fatty acid residue (in formulae Ia and Ib respectively) and usually the compounds used will not have propylene oxide residues at that end of the chain. The alkylene oxide chain contains from 2 to 25 alkylene oxide residues and particularly suitable materials have from 3 to 15, especially about 6 ethylene oxide residues per molecule.

The end-capping group R² is a C_{1 to 10} hydrocarbyl group. When it is a relatively short chain alkyl group e.g. a C_{1 to 6} alkyl, especially a methyl or ethyl group, its main purpose is to cap the chain and adjust the hydrophilicity of the compound. When it is longer chain alkyl group e.g. a C_{6 to 10} alkyl group or an C_{7 to 10} aralkyl, particularly phenylalkyl group, it has the additional property of acting as a secondary hydrophobe. This may enable the properties of the composition to be adjusted to suit particular applications.

The end-capped hydrocarbyl polyalkoxylate can also be an end-capped ethylene oxide/propylene oxide copolymer. The copolymer can be a random copolymer or, and preferably a block copolymer. The end-capping groups are typically lower, particularly C₁ to C₆, alkyl, especially methyl or ethyl groups. End-capped ethylene oxide/propylene oxide random copolymers useful in the invention include those of the formula (Ic) and end-capped ethylene oxide/propylene oxide block copolymers useful in the invention include those of the formula (Id) respectively:

R¹⁴*O*.[EOᵢ.POⱼ].R¹⁵ (Ic) R¹⁴O.(AO²)ₖ.(AO³)ₗ.(AO²)ₘ.R¹⁵ (Id)

where
- R¹⁴ and R¹⁵: are each independently C_{1 to 6} alkyl groups;
- EO: is an ethylene oxide residue;
- PO: is a propylene oxide residue;
- AO²: is an ethylene oxide or propylene oxide residue
- AO³: is an ethylene oxide or propylene oxide residue, but is different from AO²
- i: is from 10 to 40;
- j: is from 10 to 30;
- k and m: are each from 0 to 30 and k+m is from 10 to 40; and
- l: is from 10 to 30

In the formula (Ic) The end-capping groups R¹¹ and R¹² are each C_{1 to 6} alkyl, especially methyl or ethyl, groups. The indices i, j, k, l and m are, within the ranges stated, such that the compound is, at least in formulation, compatible with water and preferably water soluble or dispersible. Typically i and k+m are each from 15 to 30, particularly 20 to 25, with k and m being 0 or from 5 to 20, but where the block copolymer is a ternary copolymer usually each of k and m is approximately half the total k+m, and j and l are each from 10 to 20. The formula (Id) for block copolymers includes materials having a binary block structure i.e. an EO block linked to a PO block, and ternary block structures i.e. a central block of one of EO and PO and two terminal blocks linked to the central block of the other of EO and PO. These latter are the materials commonly referred to as EO/PO block copolymers. Typically the end-capped derivatives used in the invention can be made starting with a polypropylene glycol (HO.POₗ.H), reacting this with ethylene oxide (an average of k+m moles) to form a ternary block copolymer and subsequently end-capping the copolymer to form the compound of the formula (Id). Suitable examples of such materials include the di-methyl capped EO₂₂/PO₁₆ (EO.PO.EO ternary) block copolymer.

It is an aspect of this invention that the end-capped hydrocarbyl or fatty acid polyalkoxylate is or includes one or more compounds of the formula (Ia), (Ib), (Ic) or (Id).

The organopolysiloxane having one or more polyoxyalkylene side chains is a copolymer containing organopolysiloxane and polyoxyalkylene chains. Usually such polymers are made by a graft polymerisation technique and for convenience we refer to this material as a graft copolymer. These graft copolymers are sometimes referred to as "silicone glycols" and we use this term for convenience herein. The silicone glycol used in this invention typically has the formula (II):

R⁴₃SiO.[R⁴₂SiO]ₓ.{(R⁴Si[(O.R⁵.(AO²)ₘ.R⁶]O}_{y}.SiR⁴₃ (II)

where
- R⁴: is an alkyl group and may vary along the polymer chain, but is usually uniformly methyl;
- x: is from 30 to 300. more usually from 50 to 200;
- y: is from 1 to 25, usually at least 5 and particularly from 10 to 15;
- R⁵: is a C_{3 to 6} alkylene group, particularly a propylene group:
- AO²: is an alkylene oxide, particularly ethylene oxide and/or propylene oxide, residue and may, and usually will, vary along the chain;
- m: is from 50 to 200, particularly from 80 to 150: and
- R⁶: is a hydrogen atom, a C_{1 to 18} hydrocarbyl group, particularly a C_{1 to 6} alkyl, group or a C_{2 to 10} acyl group.

Typically, the silicone glycol has a molecular weight of from 50 to 100kD, more usually from 70 to 90kD. The silicone polymer chain typically contains from about 30 to about 300, and more usually from 50 to 200. siloxane repeat units. The C_{3 to 6} alkylene group(s) R⁵ link the silicone polymeric backbone to the polyoxyalkylene side chain(s) and typically are 1,3-propylene group(s). The residues AO² are typically ethylene and/or propylene oxide residues. The polyoxyalkylene chain will usually include a substantial proportion of ethylene oxide residues so that the polymer is relatively hydrophilic. The molar proportion of ethylene oxide residues is typically from 25 to 100%, particularly about 50%, the remainder usually being propylene oxide residues. When the polyoxyalkylene side chain contains propylene oxide residues, the chain will usually be terminated by one or more propylene oxide residues. The polyoxyalkylene side chain(s) are typically relatively long e.g. 50 to 200, particularly from 80 to 150, alkylene oxide residues and correspondingly have molecular weights typically of from about 2500 to 10000. The number of polyoxyalkylene side chain bearing residues is typically more than 2, usually at least 5 and more usually from 10 to 15.

The group(s) R⁶ terminate the polyoxyalkylene side chain(s) and can be hydrogen, C_{1 to 18} hydrocarbyl, particularly alkyl, group(s) or C_{2 to 10} acyl group(s). Generally, although hydrogen termination gives more hydrophilic co-polymers, the side chains will be end-capped particularly with short chain alkyl e.g. a methyl or ethyl, group(s), or short chain acyl, such as an acetyl or propionyl, groups.

It is an aspect of this invention that the organopolysiloxane having one or more polyoxyalkylene side chains is one or more compounds of the formula (II). It is a further aspect of this invention that the end-capped hydrocarbyl or fatty acid polyalkoxylate is one or more compounds of the formula (Ia), (Ib), (Ic) or (Id) and the organopolysiloxane having one or more polyoxyalkylene side chains is one or more compounds of the formula (II).

The composition of the invention is water compatible, by which we mean that, at a concentration of at least 1% by weight, the composition is either soluble in water, or the composition is readily dispersible in water to form a colloidal or near colloidal dispersion or emulsion. Usually the individual components of the composition are themselves water compatible, but components which are not themselves water compatible may be solublised by other components of the composition so that the overall composition is water compatible. Desirably, the end-capped hydrocarbyl or fatty acid polyoxyalkylene derivatives or end-capped EO/PO block or random copolymers used in the invention are water soluble. The silicone glycols are typically readily dispersible in water but are often not truly water soluble. In some cases, even insoluble or non-dispersible components of the formulation may be used where the component(s) of the formulation combine to give a water compatible system. We expect that this will be most likely for the silicone glycol as it is typically used in a relatively low concentration as compared with the end-capped hydrocarbyl or fatty acid polyoxyalkylene derivative and the latter (or other components of the composition) may act to make it readily water dispersible. In any event we have not experienced difficulties in making compositions that are water compatible.

As those skilled in the art know, numbers of repeat units in polymers, including the numbers of alkylene oxide residues in the polymers and chains referred to herein are average values which may be non-integral.

The relatively simple composition including components selected from the two classes set out above can provide good immediate and long term spreading properties especially over hydrophobic synthetic polymer surfaces, especially of fibres such as those of polyolefins, particularly polypropylene, polyamides such as nylon, polyesters such as polyethylene terephthalate (PET) and its related co-polymers and acrylic polymers and copolymers. Substrates of polyolefin polymers, especially polypropylene, are particularly suitable for treatment using the compositions of the invention. Such 'simple' formulations can be of just two components or of mixtures of components of the two types. For convenience, this composition is referred to herein as a two component composition or a two component spreading vehicle.

They can also be usefully used on blends of one or more such hydrophobic polymers, with natural polymers such as cellulosic materials such as cotton and polyamide (protein) materials such as wool or silk. Other possible substrates include films and tapes made from such polymeric materials.

The term 'immediate spreading' in relation to the properties of the composition refers to the ability of the composition to spread over the surface of the bulk substrate on application. The term 'long term spreading' refers to the ability of the composition to spread over the surface of the individual components, particularly fibres, of the substrate over a period of up to several days to a few weeks after coating onto the substrate.

Accordingly, the invention includes a substrate, particularly a hydrophobic synthetic polymer substrate and especially such a substrate where the polymer is in fibre form coated with a composition of the invention, which can be the two component composition or a composition including other components.

Where the composition includes a compound of the formula (Ia), particularly where the group R¹ has a relatively long, particularly C₈ or longer, chain, especially an alkyl chain, we have found that it may give rise to swelling of polyolefin, particularly polypropylene substrates. In some applications this may lead to undesirable dimensional changes in the treated substrate. Compositions using compounds of the formula (Ic) and especially (Id) (and possible also of the formula (Ib)] appear not to suffer from this potential disadvantage and may be preferred in some such applications. The invention accordingly includes a substrate, particularly a hydrophobic synthetic polymer substrate, particularly a polyolefin and especially a polypropylene substrate, and especially such a substrate where the polymer is in fibre form, coated with a composition of the invention in which the at least one end-capped hydrocarbyl polyalkoxylate is at least one compound of the formula (Ic) and/or (Id). The composition can be the two component composition or a composition including other components.

The two component composition will usually be used as the vehicle for coating a further component or components providing a specific effect over the substrate, particularly the individual fibres of a fibre based textile material. To this end, the composition will usually include at least one such a further component which is compatible with the composition and provides the specific effect that is desired. Thus, in materials such as spin finishes, a lubricant; an antistatic agent, an anticorrosion additive, a cohesion additive, an anti-discolouring (anti-yellowing) additive and/or other material providing a specific effect will be included. Accordingly, the invention includes a composition of the invention including an effective amount of an active component to produce a desired effect. The invention particularly and specifically includes a composition of the invention including an effective amount of a lubricant especially a spin finish lubricant. Additionally, the invention further includes a composition of the invention including an effective amount of at least one antistatic agent, anticorrosion additive, cohesion additive or anti-discolouring (anti-yellowing) additive. Of course, these further components are compatible with the two component spreading vehicle particularly in that the overall composition remains water compatible.

The invention includes as a specific aspect such compositions including further components where the end-capped hydrocarbyl or fatty acid polyalkoxylate is one or more compounds of the formula (Ia), (Ib), (Ic) or (Id) and/or the organopolysiloxane having one or more polyoxyalkylene side chains is one or more compounds of the formula (II).

For spin finish lubricating applications, the lubricant can be any suitable compatible lubricant, particularly an alkoxylate lubricant e.g. alcohol alkoxylate lubricants, acid alkoxylate lubricants and similar materials. Alkoxylate lubricant are particularly useful as they can be made readily compatible with the composition and synthesised to be themselves water soluble or dispersible and are usually biodegradable (or very much more so than mineral oil lubricants). Thus, typically they retain and may even improve the water compatibility of the overall composition and do not adversely affect its relatively good biodegradability properties. Examples of suitable alkoxylate lubricants include alcohol alkoxylates such as alcohol, particularly C_{8 to 20}, especially C_{12 to 18} alkoxylates, particularly ethoxylates, typically containing on average from 2 to 20, particularly 3 to 15, especially 5 to 12, moles alkoxide (ethoxide) residues per mole, ethylene oxide (EO)/ propylene oxide (PO) copolymers, typically having a weight ratio of EO to PO residues of from about 3:1 to about 1:3, and so-called fatty acid, particularly C_{8 to 20} fatty acid, alkoxylates, especially ethoxylates, typically containing on average from 3 to 20, particularly 5 to 15, especially 8 to 12, moles alkoxide (ethoxide) residues per mole and castor oil alkoxylates, especially ethoxylates. Fatty acid alkoxylates can be made by reacting the fatty acid with an alkylene oxide (usually ethylene oxide) and the product is a mixture of compounds including alkoxylated fatty acid residues with a range of polyoxyalkylene chain lengths and polyoxyalkylene glycols generated by displacement from alkoxylated fatty acid species (by ethylene oxide reacting at the carboxyl function). The numbers of alkylene oxide residues indicated above for such compounds corresponds to the total alkylene oxide reacted in making the product. Even though they are mixtures of compounds, such products are known as lubricants and in this end use it is the effect that is important. Nominally similar products can be made by reacting the fatty acid or a reactive derivative e.g. a lower alkyl, especially methyl, ester, with a polyalkylene glycol, or mono-end capped e.g. lower alkyl, especially methyl or ethyl end-capped, polyalkylene glycol, particularly polyethylene glycol. The products of such reactions are typically well defined products which are polyoxyalkylene glycol esters of the fatty acid (nominal fatty acid alkoxylates). When desired the alkoxylated products (made by either synthetic strategy outlined above) can be end-capped after manufacture by conventional etherification or esterification reactions.

When the alkoxylate lubricants are end-capped they may fall within the range described above for the end-capped alkoxylates used in the two component spreading vehicle e.g. as defined in formulae (Ia to d). In this case the alkoxylate may serve both as part of the spreading vehicle and as a lubricant (alternatively stated, the two component spreading vehicle may itself include a lubricant). Mixtures of lubricants can be used and may be advantageous in some cases.

Other components which may be included in lubricating compositions, especially spin finishes include anti-yellowing surfactants and/or antistatic agents, such as quaternary ammonium surfactants or phosphates, and cohesion additives, such as relatively high molecular weight ethylene propylene oxide co-polymers.

In the two component composition, the silicone glycol is typically present at a concentration of from 3 to 50% with the remainder (50 to 97%) being the end-capped hydrocarbyl or fatty acid, polyalkoxylate. Where the polyalkoxylate is an end-capped alcohol alkoxylate, particularly of the formula (Ia), or an end-capped fatty acid polyalkoxylate, particularly of the formula (Ib), the silicone glycol is usually present as 3 to 30%, more usually 5 to 20%, desirably about 12 to about 18%, by weight, with the remainder corresponding to 97 to 70%, more usually 95 to 80%, desirably about 88 to about 82%, being the end-capped alcohol alkoxylates or fatty acid polyalkoxylate. Where the polyalkoxylate is an end-capped EO/PO copolymer, particularly a random copolymer of the formula (Ic) or a block copolymer of the formula (Id), the silicone glycol is usually present as 15 to 50%, more usually 20 to 55%, desirably about 25 to about 35%, by weight, with the remainder, corresponding to 85 to 50%, more usually 80 to 55%, desirably about 75 to about 65%, being the end-capped EO/PO copolymer. The use of lower amounts of silicone glycol may not give adequate long term spreading and larger amounts are expensive without giving additional benefits and may be positively disadvantageous by making the composition incompatible with water and/or not adequately biodegradable.

In practical formulations including materials having specific activity, the amount of the other materials will depend mainly on the nature and effectiveness of the material used. For lubricants, the proportions will typically be about 35 to about 90% by weight of the total formulation. Where the polyalkoxylate is an end-capped alcohol alkoxylate, particularly of the formula (Ia), or an end-capped fatty acid polyalkoxylate, particularly of the formula (Ib), the proportion of lubricant will usually be from about 35 to about 80%, more usually from 50 to 75%, of the total formulation. Where the polyalkoxylate is an end-capped EO/PO copolymer, particularly a random copolymer of the formula (Ic) or a block copolymer of the formula (Id), the proportion of lubricant can be somewhat higher and will usually be from about 60 to about 90%, more usually 70 to 86%, of the total formulation. In such multi-component formulations, the proportion of the silicone glycol is usually from about 3 to about 10% by weight of the formulation for all the types of capped polyalkoxylate, especially of the formula (Ia to d).

Other materials will be used in amounts depending on the desired effect. Particularly where the specific active component is effective at very low application rates, it may be useful to use lower concentrations than necessary to convey the desired amount in order to apply sufficient material to the substrate to achieve uniform coating. The need for this will depend on the particular coating technique used, the substrate being treated and the usefulness of diluting the formulation e.g. with water.

For use as a lubricating spin finish, the formulation will typically have the quantitative composition (noting the differences between compositions based on compounds of the formulae (Ia) and (Ib) and those based on compounds of the formulae (Ic) and (id):
Capped alkoxylate of the formulae (Ia) or (Ib)

| Material | (all % by weight) | typical | preferred |
|---|---|---|---|
| alkoxylate lubricant | | 35 - 80 | 50 - 75 |
| | capped alkoxylate [(Ia) or (Ib)] | 17 - 45 | 21 - 42 |
| spreading agent | | | |
| | silicone glycol | 3 - 10 | 4 - 8 |
| Capped alkoxylate of the formulae (Ic) or (Id) | | | |

| Material | (all % by weight) | typical | preferred |
|---|---|---|---|
| alkoxylate lubricant | | 60 - 90 | 70 - 86 |
| | capped alkoxylate [(Ic) or (Id)] | 7 - 30 | 10 - 20 |
| spreading agent | | | |
| | silicone glycol | 3 - 10 | 4 - 10 |

When the end capped alkoxylate also serves as the whole or part of the lubricant, the proportion of silicone glycol in the two component spreading vehicle including the alkoxylate may be towards the low end of the ranges set out above. Thus, where the alkoxylate acts entirely as the lubricant, the proportion of silicone glycol will typically be from 3 to 10% by weight of the formulation.

The formulations of the invention can be applied to the substrate neat as liquids or diluted in a suitable diluent or solvent. Whilst organic solvents could be used, we do not expect this to be particularly attractive to users. The most useful solvent or diluent is almost always water, indeed as noted above the present formulations and compositions are water soluble or dispersible as is desirable to permit subsequent removal from the substrate. The concentration of the formulation, in a diluent such as water, will depend on the method of coating to be used and the relative amount of diluted formulation and effective composition needed in the application.

In application to the substrate, some coating methods may give rise to foaming of the coating composition. This can be inhibited by use of an antifoam e.g. a silicone, in the composition.

The amount of composition or formulation of the invention applied to the substrate will depend on the effect desired. However, typically, particularly for spin finish applications such as to lubricate substrates such as spun-bonded non-woven material, particularly made from polyolefin polymers such as polypropylene, or polyester, the amount applied will typically be about 0.5 to 5%, more usually 0.75 to 2.5%, by weight of the substrate.

The invention includes a polymeric substrate having a coating of a composition of the invention, particularly a fibrous substrate in which the individual fibres are coated with the coating composition. In particular the substrate is a non-woven, particularly a spun bonded non-woven, textile material, especially one made from polyolefinic material, especially polypropylene or polyester. Such products find end use applications including carpet backing materials and geotextiles and such end use products are specifically included as aspects of the invention.

In respect of carpet backing the invention specifically includes non-woven, particularly spun bonded non-woven, but also including textile material made from woven tapes, carpet backing material, particularly made from polyester, particularly PET, or, and especially, polyolefin polymers, very particularly polypropylene, which is coated with the composition of the invention, particularly a composition additionally including a lubricant, and optionally other components of spin finish formulations; and the invention further includes carpets, particularly tufted carpets made using it. It is a particular advantage of the invention that spin finishes can be made and used that are readily soluble or dispersible in water and thus do not interfere with typical dyeing processes applied to carpet fabricated using the substrate as backing. Also spin finishes can be made which meet current demands for materials that are primarily biodegradable.

The compositions of the invention can also be used to treat geotextile materials, particularly non-woven, particularly spun bonded non-woven polyolefin, especially polypropylene, geotextiles. The main reason for treating geotextiles is to enhance their rewetting performance so that they do not act as water barriers once they are buried in the earth. Generally, longer term rewettability appears to arise from integration of fine soil particles into the fabric or onto the fibres of the geotextile, but improvement in the, relatively, short term rewetting properties is significant.

The invention also includes methods of treating substrates with compositions of the invention. In particular, it includes such methods in which the composition of the invention is coated onto a surface of a substrate, particularly a textile substrate and especially a non-woven, particularly spun bonded non-woven polyolefin, especially polypropylene substrate, especially where the composition additionally includes a lubricant and optionally other components of spin finish formulations. This method is particularly applicable to carpet backing and geotextile materials.

The following Examples illustrate the invention. All parts (pts) and percentages are by weight unless otherwise specified.

### Materials Used

### End-capped alcohol alkoxylates

| Code | Description |
|---|---|
| A1 | methyl capped C_{12 to 18} alcohol ethoxylate: EO_{6.5} |
| A2 | di-methyl capped EO₂₂/PO₁₈ (EO.PO.EO ternary) block copolymer |
| A3 | propyl capped C_{13 to 15} alcohol alkoxylate: EO₈/PO₁ random |
| A4 | methyl capped C_{12 to 13} alcohol ethoxylate: EO_{6.5} |
| A5 | methyl capped C_{9 to 11} alcohol alkoxylate: EO₅/PO_{7.7} random |
| A6 | methyl capped lauric acid ethoxylate: EO₉ |

### Silicone Glycol

- S1: co-polymer of general formula (II) in which: x is ca 100; y is between 10 and 15; R³ is a C₃ alkylene group - the residues AO² are a mixture of ethylene and propylene oxide residues in the ratio ca 1:1, the side chains having an average molecular weight of about 6000 and R⁴ is an acetyl group.

### Lubricants

| Code | Description |
|---|---|
| L1 | lauric acid ethoxylate: EO₉ |
| L2 | EO/PO block coploymer lubricant containing 30 wt% EO |
| L3 | EO/PO block coploymer lubricant containing 40 mol% EO |

### Cohesion Additive

### EP1 high molecular weight ethylene/propylene oxide copolymer (EO/PO ca 3:1 molar)

Carpet Backing - commercially available spun-bonded non-woven polypropylene textile having a basis weight of about 110 g.m⁻²

### Test Methods

Fibre/Metal Friction (F/Mµ) - Polypropylene filament yarn (120 decitex) was treated with 1% by weight of the fibre of spin finish. The fibre/metal friction was determined on a Rothschild 'F' meter at 50, 150 and 300 m.min⁻¹ the results quoted are the machine read out data.

Fibre/Fibre Friction (F/Fµ) - Polypropylene staple fibre was treated with 1% spin finish by weight of the fibre. The fibre was carded to produce a lap and each lap was conditioned at 20(±1)°C, 50(±2)% RH for 24 hours. A 200 to 250 g.m⁻²; 7.5 x 10 cm sample was cut from each lap and the Fibre/fibre friction measured using the following Sledge Test.

The sledge is a 6.5 cm square of 'Perspex' acrylic resin with its underside coated with 220 grade emery paper. The test bed is at least 25 cm long and is covered with 220 grade emery paper. A conditioned fibre lap sample is laid on the test bed with the fibres lying along the test bed direction and the sledge placed on top of the lap. A 2 kg weight is placed on top of the sledge which is attached to a load wire attached to a moving load cell. The sledge is towed over the lap at a speed of 2.5 cm.min⁻¹ until the load cell measurement reaches a steady level (the load is not itself steady as sticking and slipping effects will give a fluctuating instantaneous reading but generally between relatively constant levels). The fibre fibre friction is the average of three replicates of the measured peak load in N.

Fibre Surface Resistivity (SR) - The electrical surface resistivity of fibre laps prepared as for measuring fibre/fibre friction was measured. The result is the mean of 6 measurements (on the same lap) quoted as ohms ×10⁹ (GΩ).

Viscosity (V) - The kinematic viscosity of the neat spin finish composition was measured using a calibrated 'U' tube viscometer at 25°C. The results are given in cSt (1 cSt = 10⁻⁶ m².sec⁻¹ ).

Wicking Height (WH) - A length of untreated Carpet Backing was suspended with its lower end immersed in the neat spin finish and the height of capillary wicking in mm was noted after 10 minutes. The textile was removed from the spin finish and stored at 20(±1)°C, 50(±2)% RH for 24 hours. Any change in the location of the wicking front (in mm) was noted. Results are given as the wicking height in mm after 10 minutes and 24 hour storage.

Spreading (Spr) - A drop of neat spin finish was placed on a polypropylene sheet surface and the area covered by the drop was measured after 5 minutes and 5 hours. Spreading is given as the percentage increase in area between the two measurements.

Rewetting Time (RT) - Samples of Carpet Backing were treated with 1% of each spin finish and the samples conditioned as described above for 24 hours. The samples were tested by dropping them onto the surface of distilled water. The time, in seconds, taken for the textile to wet out completely was reported.

Stitch Penetration Force (SPF) - A piece of untreated Carpet Backing was coated on one side with 1% by weight of the textile of neat spin finish. The force needed for a needle to penetrate the fabric from the treated side (TS) was measured 5 minutes after coating using an L & M sew tester. The textile was stored for 1 week and the force needed for a needle to penetrate the fabric from the treated side was re-measured and the force needed for a needle to penetrate the fabric from the untreated side (US) was measured. For each test the results are the percentage of needle penetrations (from a run of 100) in which the measured peak penetration force exceeded 0.75 N.

### Examples 1 to 13

A range of spin finish formulations was made up with the compositions set out in Table 1 below. The spin finish compositions were applied neat to samples of the Carpet Backing at about 1.5% by weight on the Carpet Backing. The composition readily coated uniformly onto the Carpet Backing (allowing for the non-uniform nature of the substrate) and gradually spread to coat the individual fibres of the substrate. The coated substrate was tested in the tests outlined above and compared with otherwise similar control samples which were:
i completely untreated (C1);
ii treated with approx 1.5% by weight Lubricant L1 (with no spreading vehicle) (C2); and
iii treated with approx 1.5% by weight of a conventional one component silicone glycol' spin finish (C3).

The results of testing are set out in Table 2 below. In addition to the test results in Table 2, the following tests were carried out:
i Samples of the spin finishes were diluted with water to give various concentrations in the range 90 to 10% spin finish. The C2 and Example 1 spin finishes gave solutions or emulsions with no gel formation at all the concentrations tested. The C3 spin finish was incompatible with water and gave two separated phases at all concentrations tested.
ii Samples of undyed nylon carpet were wiped in three separated stripes with neat spin finish, either C3 or the composition of Example 1. The carpet samples were then dyed at 85°C using Nylomine Brown dye and assessed visually for colour uptake. The carpet treated with C3 spin finish showed three distinct areas of undyed fibre tips; the carpet treated with the compositions of Example 1 was uniformly dyed.
iii The tendency of the Carpet Backing to swell when contacted with the spin finish formulations was assessed. 30 x 5 cm samples of Carpet Backing were immersed in samples of the spin finish of Examples 11 and 13 at ambient temperature for a period of 3 months. After 1 week, 1 month and at the end of the 3 month period the samples were removed from the spin finish and the sample length measured with a ruler. The 1 week and 1 month samples were replaced in the spin finish and storage at ambient temperature continued. The results are reported in Table 3 below as the % increase in the length of the samples. The sample immersed in the spin finish formulation of Example 11 showed a gradual increase in length over the test period up to 1.7% after 3 months. That of Example 13 showed no increase until the 3 month figure of 0.15% (in practice this is close to the limiting observational precision of the method used).

**Table 1**

| Ex No | capped alkoxylate | | silicone glycol | | lubricant | | cohesive agent | |
|---|---|---|---|---|---|---|---|---|
| | material | amount | material | amount | material | amount | material | amount |
| 1 | A1 | 20 | S1 | 3 | L1 | 72 | C1 | 5 |
| 2 | A1 | 45 | S1 | 10 | L1 | 40 | C1 | 5 |
| 3 | A1 | 57 | S1 | 6 | L1 | 32 | C1 | 5 |
| 4 | A1 | 15 | S1 | 6 | L1 | 74 | C1 | 5 |
| 5 | A2 | 32 | S1 | 6 | L1 | 57 | C1 | 5 |
| 6 | A3 | 32 | S1 | 6 | L1 | 57 | C1 | 5 |
| 7 | A4 | 32 | S1 | 6 | L1 | 57 | C1 | 5 |
| 8 | A5 | 32 | S1 | 6 | L1 | 57 | C1 | 5 |
| 9 | A6 | 32 | S1 | 6 | L1 | 57 | C1 | 5 |
| 10 | A1 | 32 | S1 | 6 | L2 | 57 | C1 | 5 |
| 11 | A1 | 32 | S1 | 6 | L1 | 57 | C1 | 5 |
| 12 | A1 | 32 | S1 | 6 | L3 | 57 | C1 | 5 |
| 13 | A2 | 15 | S1 | 6 | L1 | 89 | - | - |

**Table 2**

| Ex No | F/Mµ | | | F/Fµ | SR | V | WH | (mm) | Sp | RT | SPF (%) | | |
|---|---|---|---|---|---|---|---|---|---|---|---|---|---|
| | 50 | 150 | 300 | (N) | (GΩ) | (cSt) | I | D | (%) | (sec) | I_{c} | D_{c} | Dᵤ |
| C1 | - | - | - | - | >10³ | - | - | - | - | 60 | 100 | 100 | 100 |
| C2 | 0.19 | 0.25 | 0.28 | 6.0 | >10² | 90 | 10 | 20 | 20 | 5 | 92 | 70 | 47 |
| C3 | 0.17 | 0.2 | 0.23 | 5.8 | >10³ | 180 | 15 | 55 | 50 | 60 | 39 | 28 | 25 |
| 1 | 0.2 | 0.2 | 0.3 | 4.5 | 2 | 95 | 16 | 70 | 30 | 1 | 54 | 32 | 32 |
| 2 | 0.2 | 0.2 | 0.3 | 5.3 | 2 | 105 | 25 | 80 | 50 | 1 | 48 | 29 | 53 |
| 3 | 0.2 | 0.2 | 0.3 | 5.5 | 3 | 80 | 25 | 80 | 80 | | 31 | 33 | 33 |
| 4 | 0.2 | 0.2 | 0.2 | 5.3 | 0.7 | 130 | 10 | 65 | 30 | 1 | 58 | 39 | 44 |
| 5 | 0.2 | 0.3 | 0.3 | 4.9 | 2 | 185 | 18 | 40 | 20 | <1 | 28 | 21 | 22 |
| 6 | 0.2 | 0.2 | 0.3 | 4.7 | 3 | 130 | 20 | 60 | 40 | 2 | 51 | 20 | 20 |
| 7 | 0.2 | 0.2 | 0.3 | 4.7 | 2 I | 95 | 25 | 70 | 30 | 1 | 66 | 53 | 36 |
| 8 | 0.2 | 0.3 | 0.3 | 5.6 | 5 | 130 | 25 | 55 | 40 | 2 | 29 | 30 | 40 |
| 9 | 0.2 | 0.2 | 0.2 | 4.5 | 2 | 105 | 20 | 60 | 40 | <1 | 55 | 40 | 40 |
| 10 | 0.2 | 0.3 | 0.3 | 4.4 | 50 | 185 | 20 | 55 | 40 | 3 | 33 | 39 | 30 |
| 11 | 0.2 | 0.2 | 0.3 | 4.9 | 2 | 105 | 25 | 70 | 60 | <1 | 40 | 35 | 30 |
| 12 | 0.2 | 0.3 | 0.3 | 5.0 | 40 | 240 | 15 | 40 | 30 | 4 | 44 | 32 | 29 |
| 13 | 0.19 | 0.24 | 0.29 | 5.9 | 1.3 | 115 | 18 | 50 | 60 | 1 | 36 | 28 | 25 |

**Table 3**

| Ex No | Change of length (%) | | |
|---|---|---|---|
| | 1 week | 1 month | 3 months |
| 11 | 1.0 | 1.5 | 1.7 |
| 13 | 0.0 | 0.0 | 0.2 |

## Claims

1. A water compatible surfactant composition which comprises:
i at least one hydrocarbyl end-capped hydrocarbyl polyalkoxylate and/or at least one hydrocarbyl end-capped fatty acid polyalkoxylate; and
ii at least one organopolysiloxane having one or more polyoxyalkylene side chains,
wherein the end-capped hydrocarbyl and/or fatty acid polyalkoxylate is or includes;
1) a compound of the formula (Ia) or (Ib):
R¹O.(AO¹)ₙ.R² (Ia) or R³.CO₂.(AO¹)ₙ .R² (Ib)
where
R¹ is a C_{4 to 22} hydrocarbyl group;
R³ is a C₆ to ₂₀ fatty residue;
AO¹ is an alkylene oxide residue which may vary along the chain;
n is from 2 to 25; and
R² is a C_{1 to 10} hydrocarbyl group.
or
2) wherein the end-capped hydrocarbyl polyalkoxylate is an end-capped ethylene oxide / propylene oxide random copolymer of the formula (Ic) or a block copolymer of the formula (Id):
R¹⁴O.[EOᵢ .POⱼ].R¹⁵ (Ic) R¹⁴O.(AO¹²)ₖ.(AO¹³)ₗ.(AO¹²)ₘ.R¹⁵ (Id)
where
R¹⁴ and R¹⁵ are each independently C₁ to ₆ alkyl groups;
EO is an ethylene oxide residue;
PO is a propylene oxide residue;
AO¹² is an ethylene oxide or propylene oxide residue
AO¹³ is an ethylene oxide or propylene oxide residue, but is different from AO¹²
i is from 10 to 40;
j is from 10 to 30;
k and m are each from 0 to 30 and k+m is from 10 to 40; and
l is from 10 to 30.

2. A composition as claimed in claim 1 wherein the organopolysiloxane having one or more polyoxyalkylene side chains is a compound of the formula (II):
R⁴₃SiO.[R⁴₂SiO]ₓ.{(R⁴Si[(O.R⁵.(AO²)ₘ.R⁶]O}_{y}.SiR⁴₃ (II)
where
R⁴ is an alkyl group which may vary along the polymer chain;
x is from 30 to 300;
y is from 1 to 25;
R⁵ is a C₃ to ₆ alkylene group;
AO² is an alkylene oxide residue which may vary along the chain;
m is from 50 to 200; and
R⁶ is a hydrogen atom, a C_{1to 18} hydrocarbyl group, or a C_{2 to 10} acyl group.

3. A composition as claimed in either claim 1 or claim 2 wherein the organopolysiloxane has a molecular weight of from 50 to 100kD.

4. A composition as claimed in claim 1 wherein the alkoxylate groups in the end-capped hydrocarbyl polyalkoxylate or end-capped fatty acid polyalkoxylate are ethoxylate groups.

5. A composition as claimed in any one of claims 1 to 4 wherein the ratio of organopolysiloxane to end-capped hydrocarbyl polyalkoxylate and/or end-capped fatty acid polyalkoxylate is from 3 to 97 to 50 to 50 by weight.

6. A composition as claimed in claim 5 wherein
i the end-capped hydrocarbyl polyalkoxylate and/or end-capped fatty acid polyalkoxylate is of the formula (Ia) or (1b) as defined in claim 1 and the ratio is from about 12 to about 88 to about 18 to about 82; or
ii the end-capped hydrocarbyl polyalkoxylate is an end-capped ethylene oxide / propylene oxide copolymer of the formula (Ic) or (Id) as defined in claim 1 and the ratio is from about 25 to about 75 to about 35 to about 65.

7. A synthetic polymeric substrate coated with a composition as claimed in any one of claims 1 to 6.

8. A coated substrate as claimed in claim 7 wherein the substrate is in fibre form.

9. A coated substrate as claimed in either claim 7 or claim 8 wherein the substrate polymer is a polyolefin, a polyamide, a polyester, an acrylic polymer or a blend containing one or more such polymers.

10. A coated substrate as claimed in claim 9 wherein the substrate polymer is polypropylene or polyethylene terephthalate.

11. A coated substrate as claimed in any one of claims 7 to 10 wherein the substrate is a spun-bonded non-woven web.

12. A coated substrate as claimed in any one of claims 7 to 11 wherein the amount of the coating is from 0.5 to 2.5% by weight of the substrate.

13. A spin finish composition which comprises a composition as claimed in any one of claims 1 to 6 additionally containing a further component which is one or more of a lubricant, an antistatic agent, an anticorrosion additive, a cohesion additive and an anti-discolouring agent.

14. A spin finish composition as claimed in claim 13 wherein the further component is or includes an alkoxylate lubricant.

15. A spin finish composition as claimed in claim 14 wherein the alkoxylate lubricant is one or more alcohol alkoxylates, ethylene oxide / propylene oxide copolymers, fatty acid alkoxylates and/or castor oil alkoxylates.

16. A spin finish composition as claimed in either claim 14 or claim 15 comprising:
from 35 to 80% by weight alkoxylate lubricant;
from 17 to 55% by weight end-capped alcohol and/or end-capped fatty acid alkoxylate; and
from 3 to 10% by weight of organopolysiloxane having one or more polyoxyalkylene side chains.

17. A spin finish composition as claimed in claim 16 comprising:
from 50 to 75% by weight alkoxylate lubricant;
from 21 to 42% by weight end-capped alcohol and/or end-capped fatty acid alkoxylate; and
from 4 to 8% by weight of organopolysiloxane having one or more polyoxyalkylene side chains.

18. A spin finish composition as claimed in either claim 14 or claim 15 comprising:
from 60 to 90% by weight alkoxylate lubricant;
from 7 to 30% by weight end-capped ethylene oxide/propylene oxide copolymer of the formula (Ic) or (Id) as defined in claim 5; and
from 3 to 10% by weight of organopolysiloxane having one or more polyoxyalkylene side chains.

19. A spin finish composition as claimed in claim 18 comprising:
from 70 to 86% by weight alkoxylate lubricant;
from 10 to 20% by weight an end-capped ethylene oxide/propylene oxide copolymer; and
from 4 to 10% by weight of organopolysiloxane having one or more polyoxyalkylene side chains.

20. A coated substrate as claimed in any one of claims 7 to 12 wherein the coating is of a spin finish composition as claimed in any one of claims 13 to 19.

21. Carpet backing material which comprises a web of spun-bonded non-woven synthetic polymeric material coated with a spin finish composition which comprises a water compatible surfactant composition as claimed in any of claims 1 to 6, and additionally contains an alkoxylate lubricant.

22. Carpet backing material as claimed in claim 21 wherein the alkoxylate lubricant is one or more alcohol alkoxylates, ethylene oxide / propylene oxide copolymers, fatty acid alkoxylates and/or castor oil alkoxylates.

23. Carpet backing material as claimed in either claim 21 or claim 22 wherein the spin finish comprises from 35 to 80% by weight alkoxylate lubricant, from 17 to 55% by weight end-capped hydrocarbyl and/or end-capped fatty acid alkoxylate and from 3 to 10% by weight of organopolysiloxane.

24. Carpet backing material as claimed claim 23 wherein the spin finish comprises from 50 to 75% by weight alkoxylate lubricant, from 21 to 42% by weight end-capped hydrocarbyl and/or end-capped fatty acid alkoxylate and from 4 to 8% by weight of organopolysiloxane.

25. Carpet backing material as claimed in claim 21 wherein the spin finish comprises 60 to 90% by weight alkoxylate lubricant; from 7 to 30% by weight end-capped ethylene oxide / propylene oxide copolymer; and from 3 to 10% by weight of organopolysiloxane.

26. Carpet backing material as claimed in claim 25 wherein the spin finish comprises from 70 to 86% by weight alkoxylate lubricant; from 10 to 20% by weight end-capped ethylene oxide / propylene oxide copolymer; and from 4 to 10% by weight of organopolysiloxane.

27. Carpet backing material as claimed in any one of claims 21 to 26 wherein the amount of spin finish is from 0.5 to 2.5% by weight of the substrate.

## Patentansprüche

1. Wasserverträgliche Tensidzusammensetzung, die
i mindestens ein hydrocarbylendgruppenverschlossenes Hydrocarbylpolyalkoxylat und/oder mindestens ein hydrocarbylendgruppenverschlossenes Fettsäurepolyalkoxylat und
ii mindestens ein Organopolysiloxan mit einer oder mehreren Polyoxyalkylen-Seitenketten, umfasst, wobei das endgruppenverschlossene Hydrocarbyl- und/oder Fettsäurepolyalkoxylat
1) eine Verbindung der Formel (Ia) oder (Ib):
R¹O.(AO¹)ₙ.R² (Ia) oder R³.CO₂.(AO¹)ₙ.R² (Ib)
wobei
R¹ für eine C₄₋₂₂-Hydrocarbylgruppe steht;
R³ für einen C₆₋₂₀-Fettrest steht;
AO¹ für einen Alkylenoxidrest steht, der entlang der Kette variieren kann;
n für 2 bis 25 steht und
R² für eine C₁₋₁₀-Hydrocarbylgruppe steht;
ist oder enthält oder
2) wobei das endgruppenverschlossene Hydrocarbylpolyalkoxylat ein endgruppenverschlossenes statistisch aufgebautes Ethylenoxid/Propylenoxid-Copolymer der Formel (Ic) oder ein Blockcopolymer der Formel (Id) ist:
R¹⁴O.[EOᵢ.POⱼ].R¹⁵ (Ic)
R¹⁴O.(AO¹²)ₖ.(AO¹³)ₗ.(AO¹²)ₘ.R¹⁵ (Id)
wobei
R¹⁴ und R¹⁵ jeweils unabhängig für C₁₋₆-Alkylgruppen stehen;
EO für einen Ethylenoxidrest steht;
PO für einen Propylenoxidrest steht;
AO¹² für einen Ethylenoxid- oder Propylenoxidrest steht;
AO¹³ für einen Ethylenoxid- oder Propylenoxidrest steht, aber von AO¹² verschieden ist;
i für 10 bis 40 steht;
j für 10 bis 30 steht;
k und m jeweils für 0 bis 30 stehen und k+m für 10 bis 40 steht; und
l 10 bis 30 steht.

2. Zusammensetzung nach Anspruch 1, wobei es sich bei dem Organopolysiloxan mit einer oder mehreren Polyoxyalkylen-Seitenketten um eine Verbindung der Formel (II) handelt:
R⁴₃SiO. [R⁴₂SiO]ₓ.{(R⁴Si[(O.R⁵.(AO²)ₘ.R⁶]O}y.SiR⁴₃ (II)
wobei
R⁴ für eine Alkylgruppe steht, die entlang der Polymerkette variieren kann;
x für 30 bis 300 steht;
y für 1 bis 25 steht;
R⁵ für eine C₃₋₆-Alkylengruppe steht;
AO² für einen Alkylenoxidrest steht, der entlang der Kette variieren kann;
m für 50 bis 200 steht; und
R⁶ für ein Wasserstoffatom, eine C₁₋₁₈-Hydrocarbylgruppe oder eine C₂₋₁₀-Acylgruppe steht.

3. Zusammensetzung nach Anspruch 1 oder Anspruch 2, wobei das Organopolysiloxan ein Molekulargewicht von 50 bis 100 kD aufweist.

4. Zusammensetzung nach Anspruch 1, wobei es sich bei den Alkoxylatgruppen in dem endgruppenverschlossenen Hydrocarbylpolyalkoxylat oder endgruppenverschlossenen Fettsäurepolyalkoxylat um Ethoxylatgruppen handelt.

5. Zusammensetzung nach einem der Ansprüche 1 bis 4, wobei das Gewichtsverhältnis von Organopolysiloxan zu endgruppenverschlossenem Hydrocarbylpolyalkoxylat und/oder endgruppenverschlossenem Fettsäurepolyalkoxylat 3 zu 97 bis 50 zu 50 beträgt.

6. Zusammensetzung nach Anspruch 5, wobei
i das endgruppenverschlossene Hydrocarbylpolyalkoxylat und/oder endgruppenverschlossene Fettsäurepolyalkoxylat der Formel (Ia) oder (Ib) gemäß Anspruch 1 entsprechen und das Verhältnis etwa 12 zu etwa 88 bis etwa 18 zu etwa 82 beträgt; oder
ii es sich bei dem endgruppenverschlossenen Hydrocarbylpolyalkoxylat um ein endgruppenverschlossenes Ethylenoxid/Propylenoxid-Copolymer der Formel (Ic) oder (Id) gemäß Anspruch 1 handelt und das Verhältnis etwa 25 zu etwa 75 bis etwa 35 zu etwa 65 beträgt.

7. Synthetisches polymeres Substrat, das mit einer Zusammensetzung nach einem der Ansprüche 1 bis 6 beschichtet ist.

8. Beschichtetes Substrat nach Anspruch 7, wobei das Substrat in Faserform vorliegt.

9. Beschichtetes Substrat nach Anspruch 7 oder Anspruch 8, wobei es sich bei dem Substratpolymer um ein Polyolefin, ein Polyamid, einen Polyester, ein Acrylpolymer oder eine Mischung, die ein oder mehrere derartige Polymere enthält, handelt.

10. Beschichtetes Substrat nach Anspruch 9, wobei es sich bei dem Substratpolymer um Polypropylen oder Polyethylenterephthalat handelt.

11. Beschichtetes Substrat nach einem der Ansprüche 7 bis 10, wobei sich bei dem Substrat um eine Spinnvliesstoffbahn handelt.

12. Beschichtetes Substrat nach einem der Ansprüche 7 bis 11, wobei die Menge der Beschichtung 0,5 bis 2,5 Gew.-% des Substrats beträgt.

13. Spinnpräparationszusammensetzung, die eine Zusammensetzung nach einem der Ansprüche 1 bis 6 umfasst, die zusätzlich eine weitere Komponente enthält, bei der es sich um ein Gleitmittel, ein Antistatikum, ein Korrosionsschutzadditiv, ein Kohäsionsadditiv und/oder ein Mittel gegen Verfärbung handelt.

14. Spinnpräparationszusammensetzung nach Anspruch 13, wobei die weitere Komponente ein Alkoxylat-Gleitmittel ist oder enthält.

15. Spinnpräparationszusammensetzung nach Anspruch 14, wobei es sich bei dem Alkoxylat-Gleitmittel um eine oder mehrere Alkoholalkoxylate, Ethylenoxid/Propylenoxid-Copolymere, Fettsäurealkoxylate und/oder Ricinusölalkoxylate handelt.

16. Spinnpräparationszusammensetzung nach Anspruch 14 oder Anspruch 15, umfassend:
35 bis 80 Gew.-% Alkoxylat-Gleitmittel;
17 bis 55 Ges.-% endgruppenverschlossenes Alkoholalkoxylat und/oder endgruppenverschlossenes Fettsäurealkoxylat; und
3 bis 10 Ges.-% Organopolysiloxan mit einer oder mehreren Polyoxyalkylen-Seitenketten.

17. Spinnpräparationszusammensetzung nach Anspruch 16, umfassend:
50 bis 75 Gew.-% Alkoxylat-Gleitmittel;
21 bis 42 Ges.-% endgruppenverschlossenes Alkoholalkoxylat und/oder endgruppenverschlossenes Fettsäurealkoxylat; und
4 bis 8 Ges.-% Organopolysiloxan mit einer oder mehreren Polyoxyalkylen-Seitenketten.

18. Spinnpräparationszusammensetzung nach Anspruch 14 oder Anspruch 15, umfassend:
60 bis 90 Gew.-% Alkoxylat-Gleitmittel;
7 bis 30 Gew.-% endgruppenverschlossenes Ethylenoxid/Propylenoxid-Copolymer der Formel (Ic) oder (Id) gemäß Anspruch 5; und
3 bis 10 Ges.-% Organopolysiloxan mit einer oder mehreren Polyoxyalkylen-Seitenketten.

19. Spinnpräparationszusammensetzung nach Anspruch 18, umfassend:
70 bis 86 Gew.-% Alkoxylat-Gleitmittel;
10 bis 20 Ges.-% endgruppenverschlossenes Ethylenoxid/Propylenoxid-Copolymer; und
4 bis 10 Ges.-% Organopolysiloxan mit einer oder mehreren Polyoxyalkylen-Seitenketten.

20. Beschichtetes Substrat nach einem der Ansprüche 7 bis 12, wobei die Beschichtung aus einer Spinnpräparationszusammensetzung nach einem der Ansprüche 13 bis 19 besteht.

21. Teppichrückenmaterial, dass eine mit einer Spinnpräparationszusammensetzung, die eine wasserverträgliche Tensidzusammensetzung nach einem der Ansprüche 1 bis 6 umfasst und zusätzlich ein Alkoxylat-Gleitmittel enthält, beschichtete Vliesstoffbahn aus synthetischem polymerem Material umfasst.

22. Teppichrückenmaterial nach Anspruch 21, wobei es sich bei dem Alkoxylat-Gleitmittel um eine oder mehrere Alkoholalkoxylate, Ethylenoxid/Propylenoxid-Copolymere, Fettsäurealkoxylate und/oder Ricinusölalkoxylate handelt.

23. Teppichrückenmaterial nach Anspruch 21 oder Anspruch 22, wobei die Spinnpräparationszusammensetzung 35 bis 80 Gew.-% Alkoxylat-Gleitmittel, 17 bis 55 Gew.-% endgruppenverschlossenes Hydrocarbylalkoxylat und/oder endgruppenverschlossenes Fettsäurealkoxylat und 3 bis 10 Ges.-% Organopolysiloxan umfasst.

24. Teppichrückenmaterial nach Anspruch 23, wobei die Spinnpräparationszusammensetzung 50 bis 70 Gew.-% Alkoxylat-Gleitmittel, 21 bis 42 Gew.-% endgruppenverschlossenes Hydrocarbylalkoxylat und/oder endgruppenverschlossenes Fettsäurealkoxylat und 4 bis 8 Gew.-% Organopolysiloxan umfasst.

25. Teppichrückenmaterial nach Anspruch 21, wobei die Spinnpräparationszusammensetzung 60 bis 90 Gew.-% Alkoxylat-Gleitmittel, 7 bis 30 Gew.-% endgruppenverschlossenes Ethylenoxid/Propylenoxid-Copolymer und 3 bis 10 Gew.-% Organopolysiloxan umfasst.

26. Teppichrückenmaterial nach Anspruch 25, wobei die Spinnpräparationszusammensetzung 70 bis 86 Gew.-% Alkoxylat-Gleitmittel, 10 bis 20 Gew.-% endgruppenverschlossenes Ethylenoxid/Propylenoxid-Copolymer und 4 bis 10 Ges.-% Organopolysiloxan umfasst.

27. Teppichrückenmaterial nach einem der Ansprüche 21 bis 26, wobei die Menge der Spinnpräparationszusammensetzung 0,5 bis 2,5 Gew.-% des Substrats beträgt.

## Revendications

1. Composition d'agent tensioactif compatible avec l'eau, comprenant :
i. au moins un polyalcoxylate d'hydrocarbyle comportant des groupes terminaux hydrocarbyles et/ou au moins un polyalcoxylate d'acide gras comportant des groupes terminaux hydrocarbyles ; et
ii. au moins un organopolysiloxane comportant une ou plusieurs chaînes latérales polyoxyalkylène,
dans laquelle le polyalcoxylate d'hydrocarbyle et/ou d'acide gras comportant des groupes terminaux est ou comprend :
1) un composé selon la formule (Ia) ou (Ib) :
R¹O.(AO¹)ₙ.R² (Ia) ou R³.CO₂.(AO¹)ₙ.R² (Ib)
où
R¹ est un groupe hydrocarbyle C₄-C₂₂ ;
R³ est un résidu gras C₆-C₂₀ ;
AO¹ est un résidu d'oxyde d'alkylène qui peut varier le long de la chaîne ;
n vaut de 2 à 25 ; et
R² est un groupe hydrocarbyle C₁-C₁₀ ;
ou
2) dans laquelle le polyalcoxylate d'hydrocarbyle comportant des groupes terminaux est un copolymère aléatoire d'oxyde d'éthylène/oxyde de propylène comportant des groupes terminaux selon la formule (Ic) ou un copolymère à blocs selon la formule (Id) :
R¹⁴O.[EO_{i.}POⱼ]_{.}R¹⁵ (Ic)
R¹⁴O.(AO¹²)ₖ. (AO¹³)ₗ. (AO¹²)ₘ.R¹⁵ (Id)
où
R¹⁴ et R¹⁵ sont chacun indépendamment des groupes alkyle C₁-C₆ ;
EO est un résidu d'oxyde d'éthylène ;
PO est un résidu d'oxyde de propylène ;
AO¹² est un résidu d'oxyde d'éthylène ou d'oxyde de propylène ;
AO¹³ est un résidu d'oxyde d'éthylène ou d'oxyde de propylène, mais est différent de AO¹²
i vaut de 10 à 40 ;
j vaut de 10 à 30 ;
k et m valent chacun de 0 à 30 et k+m vaut de 10 à 40 ; et
l vaut de 10 à 30.

2. Composition selon la revendication 1, dans laquelle l'organopolysiloxane comportant une ou plusieurs chaînes latérales polyoxyalkylène est un composé selon la formule (II) :
R⁴₃SiO. [R⁴₂SiO]ₓ . {(R⁴Si[(O.R⁵.(AO²)ₘ.R⁶]O}_{y}.SiR⁴₃ (II)
où
R⁴ est un groupe alkyle qui peut varier le long de la chaîne polymère ;
x vaut de 30 à 300 ;
y vaut de 1 à 25 ;
R⁵ est un groupe alkylène C₃-C₆ ;
AO² est un résidu d'oxyde d'alkylène qui peut varier le long de la chaîne ;
m vaut de 50 à 200 ; et
R⁶ est un atome d'hydrogène, un groupe hydrocarbyle C₁-C₁₈, ou un groupe acyle C₂-C₁₀.

3. Composition selon la revendication 1 ou la revendication 2, dans laquelle l'organopolysiloxane a une masse moléculaire de 50 kD à 100 kD.

4. Composition selon la revendication 1, dans laquelle les groupes alcoxylate dans le polyalcoxylate d'hydrocarbyle comportant des groupes terminaux ou le polyalcoxylate d'acide gras comportant des groupes terminaux sont des groupes éthoxylate.

5. Composition selon l'une quelconque des revendications 1 à 4, dans laquelle le rapport de l'organopolysiloxane contre le polyalcoxylate d'hydrocarbyle comportant des groupes terminaux et/ou le polyalcoxylate d'acide gras comportant des groupes terminaux est de 3:97 à 50:50 en poids.

6. Composition selon la revendication 5, dans laquelle :
i. le polyalcoxylate d'hydrocarbyle comportant des groupes terminaux et/ou le polyalcoxylate d'acide gras comportant des groupes terminaux est selon la formule (Ia) ou (Ib) telle que définie dans la revendication 1 et le rapport est d'environ 12 contre environ 88 à environ 18 contre environ 82 ; ou
ii. le polyalcoxylate d'hydrocarbyle comportant des groupes terminaux est un copolymère d'oxyde d'éthylène/oxyde de propylène comportant des groupes terminaux selon la formule (Ic) ou (Id) telle que définie dans la revendication 1 et le rapport est d'environ 25 contre environ 75 à environ 35 contre environ 65.

7. Substrat polymère synthétique revêtu d'une composition selon l'une quelconque des revendications 1 à 6.

8. Substrat pourvu d'un revêtement selon la revendication 7, le substrat étant sous forme de fibres.

9. Substrat pourvu d'un revêtement selon la revendication 7 ou la revendication 8, le polymère du substrat étant une polyoléfine, un polyamide, un polyester, un polymère acrylique ou un mélange contenant un ou plusieurs polymères de ce type.

10. Substrat pourvu d'un revêtement selon la revendication 9, le polymère du substrat étant le polypropylène ou le téréphtalate de polyéthylène.

11. Substrat pourvu d'un revêtement selon l'une quelconque des revendications 7 à 10, le substrat étant une bande non tissée filée fondue.

12. Substrat pourvu d'un revêtement selon l'une quelconque des revendications 7 à 11, le revêtement étant présent dans une quantité représentant de 0,5 % à 2,5 % en poids du substrat.

13. Composition de finissage de filature comprenant une composition selon l'une quelconque des revendications 1 à 6, contenant en outre un constituant supplémentaire qui est l'un d'un lubrifiant, d'un agent antistatique, d'un additif anticorrosion, d'un additif de cohésion et d'un agent prévenant l'altération de la couleur.

14. Composition de finissage de filature selon la revendication 13, dans laquelle le constituant supplémentaire est ou comprend un lubrifiant alcoxylate.

15. Composition de finissage de filature selon la revendication 14, dans laquelle le lubrifiant alcoxylate est constitué d'un ou plusieurs alcoxylates d'alcools, copolymères d'oxyde d'éthylène/oxyde de propylène, alcoxylates d'acides gras et/ou alcoxylates d'huile de ricin.

16. Composition de finissage de filature selon la revendication 14 ou la revendication 15, comprenant :
de 35 % à 80 % en poids de lubrifiant alcoxylate ;
de 17 % à 55 % en poids d'alcoxylate d'alcool comportant des groupes terminaux et/ou d'alcoxylate d'acide gras comportant des groupes terminaux ; et
de 3 % à 10 % en poids d'organopolysiloxane comportant une ou plusieurs chaînes latérales polyoxyalkylène.

17. Composition de finissage de filature selon la revendication 16, comprenant :
de 50 % à 75 % en poids de lubrifiant alcoxylate ;
de 21 % à 42 % en poids d'alcoxylate d'alcool comportant des groupes terminaux et/ou d'alcoxylate d'acide gras comportant des groupes terminaux ; et
de 4 % à 8 % en poids d'organopolysiloxane comportant une ou plusieurs chaînes latérales polyoxyalkylène.

18. Composition de finissage de filature selon la revendication 14 ou la revendication 15, comprenant :
de 60 % à 90 % en poids de lubrifiant alcoxylate ;
de 7 % à 30 % en poids d'un copolymère d'oxyde d'éthylène/oxyde de propylène comportant des groupes terminaux selon la formule (Ic) ou (Id) telle que définie dans la revendication 5 ; et
de 3 % à 10 % en poids d'organopolysiloxane comportant une ou plusieurs chaînes latérales polyoxyalkylène.

19. Composition de finissage de filature selon la revendication 18, comprenant :
de 70 % à 86 % en poids de lubrifiant alcoxylate ;
de 10 % à 20 % en poids d'un copolymère d'oxyde d'éthylène/oxyde de propylène comportant des groupes terminaux ; et
de 4 % à 10 % en poids d'organopolysiloxane comportant une ou plusieurs chaînes latérales polyoxyalkylène.

20. Substrat pourvu d'un revêtement selon l'une quelconque des revendications 7 à 12, le revêtement étant constitué d'une composition de finissage de filature selon l'une quelconque des revendications 13 à 19.

21. Matériau d'endos de tapis comprenant une bande de matériau polymère synthétique non tissé filé fondu revêtu d'une composition de finissage de filature qui comprend une composition d'agent tensioactif compatible avec l'eau selon l'une quelconque des revendications 1 à 6, et contient en outre un lubrifiant alcoxylate.

22. Matériau d'endos de tapis selon la revendication 21, dans lequel le lubrifiant alcoxylate est constitué d'un ou plusieurs alcoxylates d'alcools, copolymères d'oxyde d'éthylène/oxyde de propylène, alcoxylates d'acides gras et/ou alcoxylates d'huile de ricin.

23. Matériau d'endos de tapis selon la revendication 21 ou la revendication 22, dans lequel la composition de finissage de filature comprend de 35 % à 80 % en poids de lubrifiant alcoxylate, de 17 % à 55 % en poids d'alcoxylate d'hydrocarbyle comportant des groupes terminaux et/ou d'acide gras comportant des groupes terminaux, et de 3 % à 10 % en poids d'organopolysiloxane.

24. Matériau d'endos de tapis selon la revendication 23, dans lequel la composition de finissage de filature comprend de 50 % à 75 % en poids de lubrifiant alcoxylate, de 21 % à 42 % en poids d'alcoxylate d'hydrocarbyle comportant des groupes terminaux et/ou d'acide gras comportant des groupes terminaux, et de 4 % à 8 % en poids d'organopolysiloxane.

25. Matériau d'endos de tapis selon la revendication 21, dans lequel la composition de finissage de filature comprend de 60 % à 90 % en poids de lubrifiant alcoxylate, de 7 % à 30 % en poids d'un copolymère d'oxyde d'éthylène/oxyde de propylène comportant des groupes terminaux, et de 3 % à 10 % en poids d'organopolysiloxane.

26. Matériau d'endos de tapis selon la revendication 25, dans lequel la composition de finissage de filature comprend de 70 % à 86 % en poids de lubrifiant alcoxylate, de 10 % à 20 % en poids d'un copolymère d'oxyde d'éthylène/oxyde de propylène comportant des groupes terminaux, et de 4 % à 10 % en poids d'organopolysiloxane.

27. Matériau d'endos de tapis selon l'une quelconque des revendications 21 à 26, dans lequel la composition de finissage de filature est présente dans une quantité représentant de 0,5 % à 2,5 % en poids du substrat.
